(19) Europäisches Patentamt

European Patent Office

Office européen des brevets

(11) **EP 1 026 522 A2**

(12) **EUROPÄISCHE PATENTANMELDUNG**

(43) Veröffentlichungstag:
   **09.08.2000   Patentblatt 2000/32**

(51) Int Cl.⁷: **G01S 17/93**

(21) Anmeldenummer: **99124297.5**

(22) Anmeldetag: **06.12.1999**

(84) Benannte Vertragsstaaten:
   **AT BE CH CY DE DK ES FI FR GB GR IE IT LI LU MC NL PT SE**
   Benannte Erstreckungsstaaten:
   **AL LT LV MK RO SI**

(30) Priorität: **02.02.1999   DE 19904043**

(71) Anmelder: **Valeo Schalter und Sensoren GmbH 74321 Bietigheim-Bissingen (DE)**

(72) Erfinder:
   • **Bayha, Heiner 71739 Oberriexingen (DE)**
   • **Philipps, Werner, Dr. 71638 Ludwigsburg (DE)**
   • **Sinn, Alexandra 74214 Schöntal (DE)**

(74) Vertreter: **Dreiss, Fuhlendorf, Steimle & Becker Gerokstrasse 6 70188 Stuttgart (DE)**

(54) **System und Verfahren zum Überwachen eines Bereichs an der Seite eines Fahrzeugs**

(57)   Die Erfindung betrifft ein System zum Überwachen eines Bereichs an der Seite eines Fahrzeugs (3) in einem dynamischen Verkehrsumfeld. Um bei einem dynamischen Verkehrsumfeld Objekte in dem zu überwachenden Bereich an der Seite des Fahrzeugs auf einfache Weise in relevante und irrelevante Objekte unterscheiden zu können, schlägt die Erfindung ein System vor, das gekennzeichnet ist durch:

-   eine seitlich an dem Fahrzeug (3) angeordnete Infrarot (IR)-Sendeeinheit (12),
-   eine in einem Abstand (d) zu der IR-Sendeeinheit (12) seitlich an dem Fahrzeug (3) angeordnete IR-Empfangseinheit (13),
-   erste Mittel zum Bestimmen des Austrittswinkels ($\alpha_i$) der IR-Strahlen (16) aus der IR-Sendeeinheit (12),
-   zweite Mittel zum Bestimmen des Einfallswinkels ($\beta_i$) der IR-Strahlen (21), die an einem Objekt (18; 20) reflektiert wurden, in die IR-Empfangseinheit (13), und
-   eine Auswerteeinheit zum Bestimmen, ob sich das Objekt (18; 20) innerhalb des überwachten Bereichs befindet.

Fig.1

**Beschreibung**

Die vorliegende Erfindung betrifft ein System und ein Verfahren zum Überwachen eines Bereichs an der Seite eines Fahrzeugs in einem dynamischen Verkehrsumfeld.

Ein Fahrer eines Fahrzeugs kann den Bereich um das Fahrzeug herum unmittelbar durch die Fahrzeugscheiben und mittelbar durch die Fahrzeugrückspiegel einsehen. Durch die Fahrzeugscheiben kann der Fahrer im wesentlichen den Bereich vor dem Fahrzeug und die Bereiche seitlich vor dem Fahrzeug einsehen. Den Bereich hinter dem Fahrzeug kann der Fahrer durch den Fahrzeuginnenrückspiegel einsehen, die Bereiche seitlich hinter dem Fahrzeug durch einen oder mehrere Fahrzeugaußenrückspiegel.

Aufgrund des eingeschränkten Blickfelds des Fahrers und der geometrischen Verhältnisse an einem Fahrzeug (z. B. aufgrund von sichtbehindernden Holmen zwischen den Fahrzeugfenstern) ist es dem Fahrer des Fahrzeugs jedoch nicht möglich, alle Bereiche um ein Fahrzeug herum einzusehen. Unmittelbar hinter und vor dem Fahrzeug gibt es Bereiche, die der Fahrer nicht einsehen kann. Ebenso gibt es Bereiche an der Seite des Fahrzeugs, die der Fahrer ohne eine erhebliche Änderung des Blickfelds durch Drehung seines Kopfes nicht einsehen kann. Diese uneinsehbaren Bereiche an der Seite des Fahrzeugs werden als Totwinkelbereiche des Fahrzeugs bezeichnet.

Aus dem Stand der Technik ist es bekannt, die Bereiche unmittelbar vor und hinter dem Fahrzeug mittels Einparkhilfen zu überwachen. Da diese Bereiche in einem dynamischen Verkehrsumfeld in der Regel unwichtig sind, sind die Einparkhilfen auf ein stationäres Verkehrsumfeld ausgerichtet. In einem dynamischen Verkehrsumfeld befinden sich das Fahrzeug und Objekte in dem zu überwachenden Bereich (in der Regel andere Fahrzeuge auf benachbarten Fahrspuren) in Bewegung. In einem stationären Verkehrsumfeld befinden sich das Fahrzeug und die Objekte in dem zu überwachenden Bereich dagegen nahezu im Stillstand. Ein stationäres Verkehrsumfeld liegt bspw. beim Einparken des Fahrzeugs zwischen zwei anderen parkenden Fahrzeugen vor. Eine Einparkhilfe ist bspw. aus der DE 32 44 358 A1 bekannt. Die dort offenbarte Einparkhilfe weist an der Rückseite eines Fahrzeugs eine Infrarot (IR)-Sendeeinheit und in einem Abstand zu dieser eine IR-Empfangseinheit auf. Die von der IR-Sendeeinheit ausgesandten IR-Primärstrahlen werden von einem Objekt in dem zu überwachenden Bereich reflektiert. Die reflektierten IR-Sekundärstrahlen werden von der IR-Empfangseinheit empfangen. Aus dem Austrittswinkel der IR-Primärstrahlen aus der IR-Sendeeinheit, aus dem Einfallswinkel der IR-Sekundärstrahlen in die IR-Empfangseinheit und aus dem Abstand zwischen der IR-Sendeeinheit und der IR-Empfangseinheit wird dann der Abstand zwischen dem Fahrzeug und dem Objekt ermittelt und dem Fahrer mitgeteilt.

Systeme der eingangs genannten Art zur Überwachung der seitlichen Bereiche eines Fahrzeugs in einem dynamischen Verkehrsumfeld sind ebenfalls aus dem Stand der Technik bekannt. So ist bspw. aus der US 5,530,447 ein Verfahren und ein System zur Überwachung des Totwinkelbereichs eines Fahrzeugs bekannt. Dieses bekannte System arbeitet mit Radarstrahlen. Die Radarstrahlen weisen einen so großen Austrittswinkel auf, daß der überwachte seitliche Bereich eine Fahrbahn auf jeder Seite des Fahrzeugs umfasst. Um ein sog. relevantes Objekt von einem sog. irrelevanten Objekt unterscheiden zu können, wird die Bewegungsgeschwindigkeit des Objekts und die Geschwindigkeit des Fahrzeugs bestimmt und ausgewertet. Es wird davon ausgegangen, daß in einem dynamischen Verkehrsumfeld Objekte, die eine sehr geringe Bewegungsgeschwindigkeit aufweisen (z. B. Fußgänger) oder stationär sind (z. B. Bäume, Verkehrsschilder), nicht relevant sind, da sie das Fahrzeug in einem dynamischen Verkehrsumfeld (z. B. bei einen Spurwechsel des Fahrzeugs) in der Regel nicht behindern. Objekte mit einer relativ großen Bewegungsgeschwindigkeit (z. B. andere Fahrzeuge auf benachbarten Fahrspuren) werden dagegen als relevant beurteilt.

Zur Messung der Geschwindigkeit des Fahrzeugs weist das System einen Geschwindigkeitssensor auf. Zur Bestimmung der Geschwindigkeit des Objekts weist das System Mittel zum Abschätzen der Geschwindigkeit des Objekts mit einem Kalman-Filter auf. Dieses bekannte System hat den Nachteil, daß es sehr aufwendig aufgebaut ist und daß es die Relevanz der Objekte auf recht aufwendige Art und Weise über die Geschwindigkeiten der Objekte und des Fahrzeugs bestimmt. Der vorliegenden Erfindung liegt die Aufgabe zugrunde, ein System der eingangs genannten Art dahingehend auszugestalten und weiterzubilden, daß Objekte in einem genau begrenzten überwachten Bereich an der Seite eines Fahrzeugs auf einfache Weise erkannt und von Objekten außerhalb dieses Bereichs unterschieden werden können.

Zur Lösung dieser Aufgabe schlägt die Erfindung ausgehend von dem System der eingangs genannten Art ein System vor, das gekennzeichnet ist durch

- mindestens eine seitlich an dem Fahrzeug angeordnete Infrarot (IR)-Sendeeinheit zum Aussenden von IR-Primärstrahlen,

- mindestens eine in einem Abstand zu der IR-Sendeeinheit seitlich an dem Fahrzeug angeordnete IR-Empfangseinheit zum Empfangen von IR-Strahlen,

- erste Mittel zum Bestimmen des Austrittswinkels der IR-Primärstrahlen aus der IR-Sendeeinheit,

- zweite Mittel zum Bestimmen des Einfallswinkels der an einem Objekt, das sich an der Seite des Fahrzeugs befindet, reflektierten IR-Sekundärstrahlen in die IR-Empfangseinheit, und

- eine Auswerteeinheit zum Bestimmen, ob sich das Objekt innerhalb des überwachten Bereichs befindet.

Das erfindungsgemäße System überwacht den Bereich an der Seite des Fahrzeugs. Da die Überwachung in einem dynamischen Verkehrsumfeld mit bewegten Objekten und Fahrzeugen erfolgt, muss der Bereich an der Seite des Fahrzeugs nicht lückenlos überwacht werden. Vielmehr ist es für eine sichere und zuverlässige Überwachung des Bereichs ausreichend, wenn ausgewählte Teilbereiche des Bereichs an der Seite des Fahrzeugs überwacht werden. Falls Objekte innerhalb des überwachten Bereichs detektiert werden, wird dies dem Fahrer des Fahrzeugs angezeigt oder mitgeteilt.

Durch die geometrische Anordnung der IR-Sendeeinheit und der IR-Empfangseinheit kann der zu überwachende Bereich genau abgegrenzt werden. Die Kontur des zu überwachenden Bereichs kann nahezu beliebig ausgestaltet werden. Dadurch kann einerseits sichergestellt werden, dass auch tatsächlich alle gewünschten Bereiche an der Seite des Fahrzeugs überwacht werden und andererseits, dass nicht größere Bereiche als gewünscht überwacht werden.

Grundsätzlich sind im Automobilbereich Systeme mit räumlich voneinander getrennten Sende-/ Empfangseinheiten unerwünscht. Bei dem System gemäß der vorliegenden Erfindung wird jedoch gerade die räumliche Trennung von IR-Sendeeinheit und IR-Empfangseinheit für eine optimale Realisierung des Systems ausgenutzt. Der überwachte Bereich läßt sich umso genauer abgrenzen, desto größer der Abstand zwischen der IR-Sende- und der IR-Empfangseinheit ist.

Das erfindungsgemäße System ermöglicht es, Objekte in einem genau begrenzten Bereich an der Seite des Fahrzeugs auf einfache Weise zu erkennen und von Objekten außerhalb dieses Bereichs zu unterscheiden.

Gemäß einer vorteilhaften Weiterbildung der vorliegenden Erfindung wird vorgeschlagen, dass die Auswerteeinheit anhand des Austrittswinkels der IR-Primärstrahlen, des Einfallswinkels der IR-Sekundärstrahlen und des Abstands zwischen der IR-Sendeeinheit und der IR-Empfangseinheit bestimmt, ob sich das Objekt innerhalb des überwachten Bereichs befindet.

Diese Weiterbildung beruht auf dem Prinzip, dass ausgehend von zwei in einem Abstand zueinander an der Seite des Fahrzeugs angeordneten Referenzpunkten, die Position eines jeden Objektpunkts innerhalb des zu überwachenden Bereichs durch den Schnittpunkt zweier Referenzgeraden eindeutig bestimmt ist. Die erste Referenzgerade verläuft durch den ersten Referenzpunkt und den Objektpunkt, die zweite Referenzgerade durch den zweiten Referenzpunkt und den Objektpunkt. Aus den Winkeln der beiden Referenzgeraden relativ zu der Längsachse des Fahrzeugs und aus dem Abstand der beiden Referenzpunkte zueinander kann die Position des Objektpunkts relativ zu dem Fahrzeug eindeutig bestimmt werden.

Zum Überwachen des Bereichs an der Seite des Fahrzeugs sendet die IR-Sendeeinheit IR-Primärstrahlen mit unterschiedlichen Austrittswinkeln aus. Falls die IR-Primärstrahlen auf ein Objekt an der Seite des Fahrzeugs treffen, werden die IR-Primärstrahlen von dem Objekt als IR-Sekundärstrahlen reflektiert. Zumindest einige der reflektierten IR-Sekundärstrahlen treffen dann in einem bestimmten Einfallswinkel auf die IR-Empfangseinheit. Aus dem Austrittswinkel, dem Einfallswinkel und dem Abstand der IR-Sendeeinheit zu der IR-Empfangseinheit bestimmt die Auswerteeinheit, ob sich das Objekt in dem überwachten Bereich befindet.

Gemäß einer anderen vorteilhaften Weiterbildung der vorliegenden Erfindung wird vorgeschlagen, daß der zu überwachende Bereich der Totwinkelbereich des Fahrzeugs ist. Der zu überwachende Bereich kann in seiner Kontur und seiner Größe dem Totwinkelbereich eines beliebigen Fahrzeugs angepaßt werden. Der Totwinkelbereich kann sich auch abhängig von der Sitzposition des Fahrers verändern. Der zu überwachende Bereich kann auch an einen sich ändernden Totwinkelbereich angepaßt werden. Zusammen mit der Überwachung der Bereiche um das Fahrzeug herum durch die Fahrzeugfenster und mittels der Fahrzeugrückspiegel, kann dadurch eine Überwachung derjenigen Bereiche um das Fahrzeug herum sichergestellt werden, die bei einem dynamischen Verkehrsumfeld von Bedeutung sind.

Gemäß noch einer anderen vorteilhaften Weiterbildung der Erfindung wird vorgeschlagen, daß die IR-Sendeeinheit mehrere IR-Sendeelemente aufweist, die jeweils einen begrenzten Austrittswinkelbereich aufweisen, wobei die einzelnen IR-Sendeelemente derart ausgerichtet sind, daß die Austrittswinkelbereiche der IR-Sendeelemente fächerförmig nebeneinander angeordnet sind. Die einzelnen IR-Sendeelemente sind vorzugsweise derart ausgerichtet, dass die Austrittswinkelbereiche der IR-Sendeelemente in einem Abstand zueinander angeordnet sind. Das ist dann der Fall, wenn die Abstände der Hauptrichtungen der einzelnen Austrittswinkelbereiche größer sind als die Austrittswinkelbereiche der IR-Sendeelemente. Insbesondere in einem dynamischen Verkehrsumfeld mit bewegten Fahrzeugen und Objekten ist eine lückenlose Überwachung des Bereichs an der Seite des Fahrzeugs nicht nötig, da davon ausgegangen werden kann, dass sich das Fahrzeug und ein Objekt, das sich in einem nicht überwachten Teilbereich befindet, derart relativ zueinander bewegen, dass sich das Objekt früher oder später in einem überwachten Teilbereich befinden wird. Vorteilhafterweise sind die IR-Sendeelemente als IR-Light-Emitting-Diodes (LEDs) ausgebildet.

Gemäß einer weiteren vorteilhaften Weiterbildung der vorliegenden Erfindung wird vorgeschlagen, daß die IR-Empfangseinheit mehrere IR-Empfangselemente aufweist, die jeweils einen begrenzten Einfallswinkelbereich aufweisen, wobei die einzelnen IR-Empfangselemente derart ausgerichtet sind, daß die Einfallswinkelbereiche der IR-Empfangselemente fächerförmig nebeneinander angeordnet sind. Die einzelnen IR-Empfangselemente sind vorzugsweise derart ausgerichtet, dass die Einfallswinkelbereiche der IR-Empfangselemente in einem Abstand zueinander angeordnet sind. Das ist dann der Fall, wenn die Abstände der Hauptrichtungen der einzelnen Einfallswinkelbereiche größer sind als die Einfallswinkelbereiche der IR-Empfangselemente. Die IR-Empfangselemente sind vorteilhafterweise als IR-Photodioden ausgebildet.

Gemäß einer bevorzugten Ausführungsform der Erfindung betragen die Austrittswinkelbereiche der IR-Sendeelemente und/oder die Einfallswinkelbereiche der IR-Empfangselemente in etwa 5 Winkelgrad und die Abstände der Hauptrichtungen der einzelnen Austrittswinkelbereiche und/oder der einzelnen Einfallswinkelbereiche in etwa 15 Winkelgrad. Gemäß dieser Ausführungsform betragen die Abstände zwischen den einzelnen Austrittswinkelbereichen bzw. Einfallswinkelbereichen in etwa 10 Winkelgrad. In diesen Teilbereichen zwischen den Austrittswinkelbereichen bzw. den Einfallswinkelbereichen findet keine Überwachung statt. Damit das System einen ausreichend großen Überwachungsbereich abdecken kann, wird vorgeschlagen, daß die IR-Sendeeinheit sechs IR-Sendeelemente und/ oder die IR-Empfangseinheit sechs IR-Empfangselemente aufweist. Bei Austritts bzw. Einfallswinkelbereichen der IR-Sende- bzw. IR-Empfangselementen von etwa 5 Winkelgrad und einem Abstand der Hauptrichtungen der Austritts- bzw. Einfallswinkelbereiche von etwa 15 Winkelgrad ergibt sich damit ein Austritts- bzw. Einfallswinkelbereich der gesamten IR-Sende- bzw. IR-Empfangseinheit von etwa 80 Winkelgrad. Dadurch kann ein nahezu rechtwinkliger Bereich an der Seite des Fahrzeugs sicher und zuverlässig überwacht werden.

Die IR-Sendeeinheit ist vorteilhafterweise an einem Fahrzeugaußenspiegel auf der zu überwachenden Seite des Fahrzeugs angeordnet. Auf diese Weise kann die IR-Sendeeinheit IR-Primärstrahlen ohne eine Behinderung durch hervorstehende Fahrzeugteile o. ä. in den zu überwachenden Bereich aussenden. Die IR-Sendeeinheit kann so in dem Fahrzeugaußenspiegel ausgerichtet werden, daß die IR-Primärstrahlen in Austrittswinkeln ausgesandt werden, die von 10 Winkelgrad relativ zu der Längsachse des Fahrzeugs bis hin zu 90 Winkelgrad reichen. Dieser Offset von 10 Winkelgrad kann ohne Einschränkung der Zuverlässigkeit der Überwachung des Bereichs an der Seite des Fahrzeugs gewählt werden, da in einem dynamischen Verkehrsumfeld davon ausgegangen werden kann, dass sich in dem Winkelbereich dieses Offsets keine Objekte befinden, die nicht vorher schon in dem Winkelbereich zwischen 10 und 90 Winkelgrad detektiert worden wären. Die IR-Primärstrahlen verlaufen dann von nahezu parallel zu dem Fahrzeug bis hin zu rechtwinklig von dem Fahrzeug weg. Wenn die IR-Sendeeinheit an einem Fahrzeugaußenspiegel angeordnet ist, ist die IR-Empfangseinheit vorzugsweise seitlich am hinteren Ende des Fahrzeugs angeordnet.

Alternativ schlägt die Erfindung vor, daß die IR-Empfangseinheit an einem Fahrzeugaußenspiegel auf der zu überwachenden Seite des Fahrzeugs angeordnet ist. Dann ist die IR-Sendeeinheit vorzugsweise seitlich am hinteren Ende des Fahrzeugs angeordnet.

Gemäß einer vorteilhaften Weiterbildung der vorliegenden Erfindung weist das System dritte Mittel zum sequentiellen Ansteuern der IR-Sendeelemente auf, so daß die einzelnen IR-Sendeelemente nacheinander IR-Primärstrahlen aussenden. Wenn die Hauptrichtungen der Austrittswinkelbereiche der einzelnen IR-Sendeelemente jeweils um einem bestimmten Winkel zueinander fächerförmig versetzt sind, kann die IR-Sendeeinheit auf diese Weise nacheinander IR-Primärstrahlen mit unterschiedlichen Austrittswinkeln aussenden. So kann auf einfache Weise, durch einfaches Ansteuern der einzelnen IR-Sendeelemente, der Austrittswinkeld der IR-Primärstrahlen bestimmt werden. Die ersten Mittel bestimmen den Austrittswinkel dann vorteilhafterweise aus der Ordnungszahl des angesteuerten IR-Sendeelements und aus den Abständen der Hauptrichtungen der Austrittswinkelbereiche der IR-Sendeelemente. Falls die IR-Sendeeinheit, wie oben beschrieben, in einem Offset relativ zu der Längsachse des Fahrzeugs ausgerichtet ist, muss dieser Offset ebenfalls bei der Bestimmung des Austrittswinkels berücksichtigt werden.

Ebenso können die zweiten Mittel den Einfallswinkel vorteilhafterweise aus der Ordnungszahl des IR-Empfangselements, das die an dem Objekt reflektierten IR-Sekundärstrahlen empfängt, und aus den Abständen der Hauptrichtungen der Einfallswinkelbereiche der IR-Empfangselemente bestimmen. Auch hier muss ggf. ein Offset berücksichtigt werden.

Vorteilhafterweise bestimmt die Auswerteeinheit den Abstand des Objekts zu dem Fahrzeug aus der nachfolgenden Gleichung:

$$a = d \ (\tan \text{alfa} \times \tan \text{beta}) \ / \ (\tan \text{alfa} + \tan \text{beta}),$$

mit

     a: Abstand des Objekts zu dem Fahrzeug,
     d: Abstand der IR-Sendeeinheit zu der IR-Empfangseinheit,
     alfa: Austrittswinkel und
     beta: Einfallswinkel.

Je größer der Abstand der IR-Sendeeinheit zu der IR-Empfangseinheit ist, desto besser ist die Auflösung des Systems und desto genauer kann der Abstand des Objekts zu dem Fahrzeug bestimmt werden. Demnach ist es vorteilhaft, wenn die IR-Sendeeinheit und die IR-Empfangseinheit an einer möglichst weit vorne liegenden bzw. an einer möglichst weit hinten liegenden Stelle seitlich an dem Fahrzeug angeordnet sind.

Gemäß einer bevorzugten Ausführungsform wird vorgeschlagen, daß das System Anzeigemittel aufweist, um einem Fahrer des Fahrzeugs das Vorhandensein eines Objekts in dem Bereich an der Seite des Fahrzeugs anzuzeigen. Vorteilhafterweise zeigen die Anzeigemittel auch den Abstand des Objekts zu dem Fahrzeug an. Die Anzeigemittel können das Vorhandensein eines Objekts und/oder den Abstand eines detektierten Objekts zu dem Fahrzeug ständig oder erst bei einem beabsichtigten Spurwechsel anzeigen. Ein beabsichtigter Spurwechsel kann über einen charakteristischen Lenkwinkelverlauf oder über eine Betätigung des Blinkers festgestellt werden. Bei Gefahr eines Zusammenstoßes mit dem Objekt kann eine zusätzliche Warneinrichtung aktiviert werden. Die Gefahr besteht bspw. dann, wenn der Fahrer trotz des Vorhandenseins des Objekts das Fahrzeug in Richtung auf das Objekt lenkt. In der Gefahrensituation kann die Anzeige besonders hervorgehoben werden (z. B. durch eine größere Helligkeit, eine andere Farbe, ein anderes Symbol oder eine blinkende Darstellung der Anzeige) oder aber durch ein zusätzliches akustisches Signal ergänzt werden.

Das Vorhandensein eines Objekts und/oder der Abstand des Objekts zu dem Fahrzeug kann dem Fahrer auf unterschiedliche Weise angezeigt werden. Es ist denkbar, daß die Anzeige im Armaturenbrett erfolgt oder in das Blickfeld des Fahrers auf die Windschutzscheibe, auf die durchsichtige Cockpitabdeckung oder eine Seitenscheibe projiziert wird. Gemäß einer vorteilhaften Weiterbildung der Erfindung wird vorgeschlagen, daß die Anzeigemittel das Vorhandensein eines Objekts und/oder den Abstand des Objekts zu dem Fahrzeug in dem Fahrzeugaußenspiegel auf der Seite des Fahrzeugs anzeigen, auf der sich das Objekt befindet.

Vorteilhafterweise sind die IR-Sendeeinheit und die Anzeigemittel oder die IR-Empfangseinheit und die Anzeigemittel als eine gemeinsame Baugruppe ausgebildet. Diese Baugruppe kann dann in den Fahrzeugaußenspiegel integriert werden.

Gemäß einer vorteilhaften Weiterbildung der Erfindung wird vorgeschlagen, daß die IR-Empfangseinheit und die IR-Sendeeinheit derart zueinander ausgerichtet sind, daß mindestens einer der IR-Empfangselemente die IR-Primärstrahlen von mindestens einem der IR-Sendeelemente unmittelbar empfangen kann. Mittels dieser IR-Primärstrahlen können die IR-Sendeeinheit und die IR-Empfangseinheit miteinander synchronisiert werden.

Gemäß einer bevorzugten Ausführungsform weist das System Synchronisationsmittel zum Synchronisieren der IR-Sendeeinheit mit der IR-Empfangseinheit auf. Das Synchronisieren ist nötig, um die Zeitfenster für den Sende- und Empfangsbetrieb der einzelnen IR-Sende- und Empfangselemente abzustimmen. Vorteilhafterweise steuern die Synchronisationsmittel eines der IR-Sendeelemente der IR-Sendeeinheit derart an, daß das IR-Sendeelement in Richtung eines der IR-Empfangselemente einen Synchronisations-IR-Primärstrahl aussendet. Die Synchronisationsmittel steuern vorzugsweise das Innerste, am dichtesten am Fahrzeug angeordnete IR-Sendeelement an.

Die IR-Empfangseinheit empfängt eigentlich nur die von den Objekten reflektierten IR-Sekundärstrahlen. Die Synchronisation stellt jedoch eine Ausnahme dar, bei der ein IR-Empfangselement der IR-Empfangseinheit einen Primärstrahl als Synchronisationsstrahl unmittelbar von einem IR-Sendeelement der IR-Sendeeinheit empfängt. Durch den Synchronisationsstrahl kann die IR-Sendeeinheit auf einfache Weise mit der IR-Empfangseinheit synchronisiert werden.

Falls eine Synchronisation nicht möglich ist oder nicht erfolgreich durchgeführt wurde, ist dies ein Zeichen für einen Defekt des erfindungsgemäßen Systems. Es ist bspw. denkbar, dass das IR-Sendeelement oder das IR-Empfangselement, das zur Synchronisation eingesetzt wird, oder die Synchronisationsmittel defekt sind.

Eine weitere Aufgabe der vorliegenden Erfindung besteht darin, ein Verfahren der eingangs genannten Art dahingehend auszugestalten und weiterzubilden, daß in einem dynamischen Verkehrsumfeld Objekte in einem genau zu begrenzenden, zu überwachenden Bereich an der Seite des Fahrzeugs auf einfache Weise in relevante und irrelevante Objekte unterschieden werden können.

Zur Lösung dieser Aufgabe schlägt die Erfindung ausgehend von dem Verfahren der eingangs genannten Art ein Verfahren vor, das durch die nachfolgenden Schritte gekennzeichnet ist

- Aussenden von Infrarot (IR)-Primärstrahlen in den Bereich an der Seite des Fahrzeugs durch eine seitlich an dem Fahrzeug angeordnete IR-Sendeeinheit,
- Empfangen von an einem Objekt, das sich an der Seite des Fahrzeugs befindet, reflektierten IR-Sekundärstrahlen durch eine seitlich an dem Fahrzeug angeordnete IR-Empfangseinheit,
- Bestimmen des Austrittswinkels der IR-Primärstrahlen aus der IR-Sendeeinheit,
- Bestimmen des Einfallswinkels der IR-Sekundärstrahlen in die IR-Empfangseinheit, und
- Bestimmen, ob sich das Objekt innerhalb des überwachten Bereichs befindet.

Ein bevorzugtes Ausführungsbeispiel der vorliegenden Erfindung wird im Folgenden anhand der Zeichnung näher erläutert. Es zeigt:

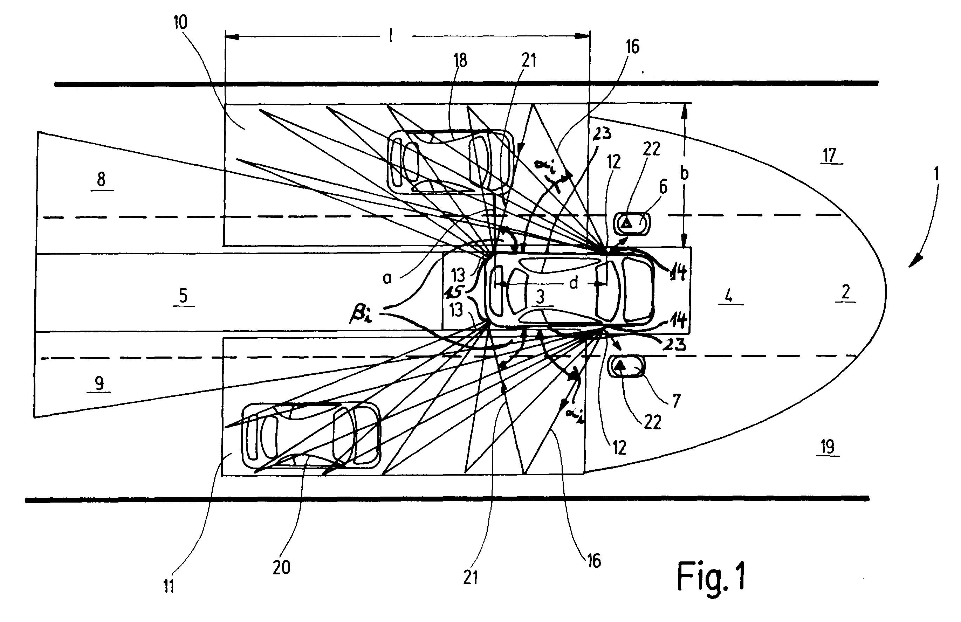

Fig. 1     ein Fahrzeug, das mit dem erfindungsgemäßen System ausgestattet ist.

In Fig. 1 ist eine dreispurige Fahrbahn mit dem Bezugszeichen 1 gekennzeichnet. Auf der mittleren Spur 2 der Fahrbahn 1 fährt ein Fahrzeug 3. Der Fahrer dieses Fahrzeugs 3 kann einen Bereich 4 vor dem Fahrzeug 3 unmittelbar durch die Windschutzscheibe einsehen. Einen Bereich 5 hinter dem Fahrzeug 3 kann der Fahrer mittelbar über einen Innenrückspiegel des Fahrzeugs 3 einsehen. Durch einen linken Fahrzeugaußenspiegel 6 und einen rechten Fahrzeugspiegel 7 kann der Fahrer ein linkes hinteres Sichtfeld 8 und ein rechtes hinteres Sichtfeld 9 einsehen.

An der linken und rechten Seite des Fahrzeugs 3 verbleiben jedoch ein linker Totwinkelbereich 10 und ein rechter Totwinkelbereich 11, den der Fahrer des Fahrzeugs 3 weder unmittelbar noch mittelbar einsehen kann, ohne den Kopf nach links oder rechts zur Seite zu drehen. Je nach der Größe der Sichtfelder 8, 9 der Fahrzeugaußenspiegel 6, 7 betragen die Abmessungen der Totwinkelbereiche 10, 11 etwa l = 6 bis 10 m in der Länge und etwa b = 3 bis 4 m in der Breite.

Die vorliegende Erfindung betrifft ein System zum Überwachen der Bereiche an der Seite des Fahrzeugs 3, insbesondere der Totwinkelbereiche 10, 11. Das System weist auf jeder Seite des Fahrzeugs 3 eine Infrarot (IR)-Sendeeinheit 12 und eine IR-Empfangseinheit 13 auf. Die IR-Sendeeinheiten 12 sind in die Fahrzeugaußenspiegel 6; 7 auf der jeweiligen Seite integriert. Die IR-Sendeeinheiten 12 weisen jeweils sechs IR-Sendeelemente 14 auf, die jeweils einen begrenzten Austrittswinkelbereich $\alpha_1$ bis $\alpha_6$ von etwa 5 Winkelgrad aufweisen. Die einzelnen IR-Sendeelemente 14 sind derart ausgerichtet, daß die Austrittswinkelbereiche $\alpha_1$ bis $\alpha_6$ der IR-Sendeelemente 14 fächerförmig nebeneinander angeordnet sind, wobei die Hauptrichtungen der Austrittswinkelbereiche $\alpha_1$ bis $\alpha_6$ einen Abstand von etwa 15 Winkelgrad zueinander aufweisen. Die IR-Sendeelemente 14 sind als IR-Light-Emitting-Diodes (LEDs) ausgebildet.

Die IR-Empfangseinheiten 13 weisen jeweils sechs IR-Empfangselemente 15 auf, die jeweils einen begrenzten Einfallswinkelbereich $\beta_1$ bis $\beta_6$ von etwa 5 Winkelgrad aufweisen. Die einzelnen IR-Empfangselemente 15 sind derart ausgerichtet, daß die Einfallswinkelbereiche $\beta_1$ bis $\beta_6$ der IR-Empfangselemente 15 fächerförmig nebeneinander angeordnet sind, wobei die Hauptrichtungen der Einfalsswinkelbereiche $\beta_1$ bis $\beta_6$ einen Abstand von etwa 15 Winkelgrad zueinander aufweisen. Die IR-Empfangselemente 15 sind als IR-Photodioden ausgebildet.

Zum Überwachen der Totwinkelbereiche 10, 11 an den Seiten des Fahrzeugs 3 sendet die IR-Sendeeinheit 12 auf jeder Seite IR-Primärstrahlen 16 mit unterschiedlichen Austrittswinkeln $\alpha_i$ aus. In dem zu überwachenden Bereich auf der linken Seite des Fahrzeugs 3 fährt auf einer linken Spur 17 der Fahrbahn 1 ein zweites Fahrzeug 18. Auf der rechten Seite des Fahrzeugs 3 fährt auf einer rechten Spur 19 der Fahrbahn 1 ein drittes Fahrzeug 20. Falls die IR-Primärstrahlen 16 auf das zweite Fahrzeug 18 oder auf das dritte Fahrzeug 20 treffen, werden die IR-Primärstrahlen 16 von dem Fahrzeug 18; 20 als IR-Sekundärstrahlen 21 reflektiert. Zumindest einige der IR-Sekundärstrahlen 21 treffen dann in einem bestimmten Einfallswinkel $\beta_i$ auf die IR-Empfangseinheit 13. Aus dem Austrittswinkel $\alpha_i$, dem Einfallswinkel $\beta_i$ und dem Abstand d der IR-Sendeeinheit 12 zu der IR-Empfangseinheit 13 bestimmt eine Auswerteeinheit dann, ob sich die Fahrzeuge 18; 20 in den überwachten Bereichen befinden. Die in Figur 1 dargestellten IR-Primärstrahlen 16 werden nicht an den Fahrzeugen 18; 20, sondern an imaginären Objekten reflektiert, die an dem Rand der überwachten Bereiche 10; 11 angeordnet sind. Anhand der imaginären Objekte soll die Abgrenzung der überwachten Bereiche verdeutlicht werden.

Die Auswerteeinheit kann auch den Abstand a der Fahrzeuge 18; 20 zu dem Fahrzeug 3 anhand der nachfolgenden Gleichung bestimmen:

$$a = d\,(\tan \alpha_i \times \tan \beta_i) / (\tan \alpha_i + \tan \beta_i),$$

mit a: Abstand des Fahrzeugs 18; 20 zu dem Fahrzeug 3,
d: Abstand der IR-Sendeeinheit 12 zu der IR-Empfangseinheit 13,
$\alpha_i$: Austrittswinkel und
$\beta_i$: Einfallswinkel.

Das Vorhandensein der Fahrzeuge 18; 20 in dem Totwinkelbereich 10; 11 wird dem Fahrer des Fahrzeugs 3 als Symbol 22'in den Fahrzeugaußenspiegeln 6; 7 angezeigt.

Die IR-Empfangseinheit 12 und die IR-Sendeeinheit 13 sind derart zueinander ausgerichtet, daß das innerste einer der IR-Empfangselemente 15 die IR-Primärstrahlen 16 von dem innersten der IR-Sendeelemente 14 empfangen kann. Das System weist Synchronisationsmittel zum Synchronisieren der IR-Sendeeinheit 12 mit der IR-Empfangseinheit 13 auf. Die Synchronisationsmittel steuern das innerste IR-Sendeelement 14 der IR-Sendeeinheit 12 derart an, daß das IR-Sendeelement 14 in Richtung des innersten IR-Empfangselements 15 einen Synchronisations-IR-Primärstrahl 23 aussendet. Das IR-Sendeelement 14 zur Synchronisation bildet das siebte IR-Sendeelement 14 der Sendeeinheit 12 und das IR-Empfangselement 15 zur Synchronisation bildet das siebte IR-Empfangselement 15 der IR-Empfangseinheit 13.

Es ist auch denkbar, daß auf jeder Seite des Fahrzeugs 3 jeweils zwei IR-Sendeeinheiten 12 und zwei IR-Empfangseinheit 13 angeordnet sind. Vorzugsweise ist dann auf jeder Seite im vorderen Bereich des Fahrzeugs 3 eine IR-Sendeeinheit 12 angeordnet, deren IR-Strahlen von einer IR-Empfangseinheit 13 im hinteren Bereich des Fahrzeugs 3 empfangen werden. Die zweite IR-Sendeeinheit 12 ist dann auf jeder Seite im hinteren Bereich des Fahrzeugs 3 angeordnet, deren IR-Strahlen von einer IR-Empfangseinheit 13 im vorderen Bereich des Fahrzeugs empfangen werden.

**Patentansprüche**

1.  System zum Überwachen eines Bereichs an der Seite eines Fahrzeugs (3) in einem dynamischen Verkehrsumfeld, **gekennzeichnet durch**

    -   mindestens eine seitlich an dem Fahrzeug (3) angeordnete Infrarot (IR)-Sendeeinheit (12) zum Aussenden von IR-Primärstrahlen (16),
    -   mindestens eine in einem Abstand (d) zu der IR-Sendeeinheit (12) seitlich an dem Fahrzeug (3) angeordnete IR-Empfangseinheit (13) zum Empfangen von IR-Strahlen (16; 21),
    -   erste Mittel zum Bestimmen des Austrittswinkels ($\alpha_i$) der IR-Primärstrahlen (16) aus der IR-Sendeeinheit (12),
    -   zweite Mittel zum Bestimmen des Einfallswinkels ($\beta_i$) der an einem Objekt (18; 20), das sich an der Seite des Fahrzeugs (3) befindet, reflektierten IR-Sekundärstrahlen (21) in die IR-Empfangseinheit (13), und
    -   eine Auswerteeinheit zum Bestimmen, ob sich das Objekt (18; 20) innerhalb des überwachten Bereichs befindet.

2.  System nach Anspruch 1, dadurch gekennzeichnet, dass die Auswerteeinheit anhand des Austrittswinkels ($\alpha_i$), des Einfallswinkels ($\beta_i$) und des Abstands (d) bestimmt, ob sich das Objekt innerhalb des überwachten Bereichs befindet.

3.  System nach Anspruch 1 oder 2, dadurch gekennzeichnet, daß der zu überwachende Bereich der Totwinkelbereich (10; 11) des Fahrzeugs (3) ist.

4.  System nach einem der Ansprüche 1 bis 3, dadurch gekennzeichnet, daß die IR-Sendeeinheit (12) mehrere IR-Sendeelemente (14) aufweist, die jeweils einen begrenzten Austrittswinkelbereich ($\alpha_1$ bis $\alpha_6$) aufweisen, wobei die einzelnen IR-Sendeelemente (14) derart ausgerichtet sind, daß die Austrittswinkelbereiche ($\alpha_1$ bis $\alpha_6$) der IR-Sendeelemente (14) fächerförmig nebeneinander angeordnet sind.

5.  System nach Anspruch 4, dadurch gekennzeichnet, dass die einzelnen IR-Sendeelemente (14) derart ausgerichtet sind, dass die Austrittswinkelbereiche ($\alpha_1$ bis $\alpha_6$) der IR-Sendeelemente (14) in einem Abstand zueinander angeordnet sind.

6.  System nach Anspruch 4 oder 5, dadurch gekennzeichnet, daß die IR-Sendeelemente (14) als IR-Light-Emitting-Diodes (LEDs) ausgebildet sind.

7.  System nach einem der Ansprüche 1 bis 6, dadurch gekennzeichnet, daß die IR-Empfangseinheit (13) mehrere IR-Empfangselemente (15) aufweist, die jeweils einen begrenzten Einfallswinkelbereich ($\beta_1$ bis $\beta_6$) aufweisen, wobei die einzelnen IR-Empfangselemente (15) derart ausgerichtet sind, daß die Einfallswinkelbereiche ($\beta_1$ bis $\beta_6$) der IR-Empfangselemente (15) fächerförmig nebeneinander angeordnet sind.

8.  System nach Anspruch 7, dadurch gekennzeichnet, dass die einzelnen IR-Empfangselemente (15) derart ausgerichtet sind, dass die Einfallswinkelbereiche ($\beta_1$ bis $\beta_6$) der IR-Empfangselemente (15) in einem Abstand zueinander angeordnet sind.

9.  System nach Anspruch 7 oder 8, dadurch gekennzeichnet, daß die IR-Empfangselemente (15) als IR-Photodioden ausgebildet sind.

10. System nach einem der Ansprüche 4 bis 9, dadurch gekennzeichnet, daß die Austrittswinkelbereiche ($\alpha_1$ bis $\alpha_6$) der IR-Sendeelemente (14) und/oder die Einfallswinkelbereiche ($\beta_1$ bis $\beta_6$) der IR-Empfangselemente (15) in etwa 15 Winkelgrad betragen und dass die Abstände der Hauptrichtungen der einzelnen Austrittswinkelbereiche ($\alpha_1$ bis $\alpha_6$) und/oder der einzelnen Einfallswinkelbereiche ($\beta_1$ bis $\beta_6$) in etwa 15 Winkelgrad betragen.

11. System nach einem der Ansprüche 4 bis 10, dadurch gekennzeichnet, daß die IR-Sendeeinheit (12) sechs IR-Sendeelemente (14) und/oder die IR-Empfangseinheit (13) sechs IR-Empfangselemente (15) aufweist.

12. System nach einem der Ansprüche 1 bis 11, dadurch gekennzeichnet, daß die IR-Sendeeinheit (12) an einem Fahrzeugaußenspiegel (6; 7) auf der zu überwachenden Seite des Fahrzeugs (3) angeordnet ist.

13. System nach einem der Ansprüche 1 bis 11, dadurch gekennzeichnet, daß die IR-Empfangseinheit (13) an einem Fahrzeugaußenspiegel (6; 7) auf der zu überwachenden Seite des Fahrzeugs (3) angeordnet ist.

14. System nach einem der Ansprüche 4 bis 13, dadurch gekennzeichnet, daß das System dritte Mittel zum sequentiellen Ansteuern der IR-Sendeelemente (14) aufweist, so daß die einzelnen IR-Sendeelemente (14) nacheinander IR-Primärstrahlen (16) aussenden.

15. System nach einem der Ansprüche 5 bis 14, dadurch gekennzeichnet, daß die ersten Mittel den Austrittswinkel ($\alpha_i$) aus der Ordnungszahl des angesteuerten IR-Sendeelements (14) und aus den Abständen der Hauptrichtungen der Austrittswinkelbereiche ($\alpha_1$ bis $\alpha_6$) der IR-Sendeelemente (14) bestimmen.

16. System nach einem der Ansprüche 8 bis 15, dadurch gekennzeichnet, daß die zweiten Mittel den Einfallswinkel ($\beta_i$) aus der Ordnungszahl des IR-Empfangselements (15), das die an dem Objekt (18; 20) reflektierten IR-Sekundärstrahlen (21) empfängt, und aus den Abständen der Hauptrichtungen der Einfallswinkelbereiche ($\beta_1$ bis $\beta_3$) der IR-Empfangselemente (15) bestimmen.

17. System nach einem der Ansprüche 1 bis 16, dadurch gekennzeichnet, daß die Auswerteeinheit den Abstand (a) des Objekts (18; 20) zu dem Fahrzeug (3) aus der nachfolgenden Gleichung bestimmt:

a = d (tan alfa x tan beta) / (tan alfa + tan beta),

mit a: Abstand (a) des Objekts (18; 20) zu dem Fahrzeug (3),
d: Abstand (d) der IR-Sendeeinheit (12) zu der IR-Empfangseinheit (13),
alfa: Austrittswinkel ($\alpha_i$) und
beta: Einfallswinkel ($\beta_i$).

18. System nach einem der Ansprüche 1 bis 17, dadurch gekennzeichnet, daß das System Anzeigemittel aufweist, um einem Fahrer des Fahrzeugs (3) das Vorhandensein eines Objekts (18; 20) in dem Bereich an der Seite des Fahrzeugs (3) anzuzeigen.

19. System nach Anspruch 18, dadurch gekennzeichnet, daß die Anzeigemittel den Abstand (a) des Objekts (18; 20) zu dem Fahrzeug (3) anzeigen.

20. System nach Anspruch 18 oder 19, dadurch gekennzeichnet, daß die Anzeigemittel das Vorhandensein eines Objekts (18; 20) und/oder den Abstand (a) des Objekts (18; 20) zu dem Fahrzeug (3) in dem Fahrzeugaußenspiegel (6; 7) auf der Seite des Fahrzeugs (3) anzeigen, auf der sich das Objekt (18; 20) befindet.

21. System nach Anspruch 12 oder 13 und 20, dadurch gekennzeichnet, daß die IR-Sendeeinheit (12) und die Anzeigemittel oder die IR-Empfangseinheit (13) und die Anzeigemittel als eine gemeinsame Baugruppe ausgebildet sind.

22. System nach einem der Ansprüche 4 bis 21, dadurch gekennzeichnet, daß die IR-Empfangseinheit (13) und die IR-Sendeeinheit (12) derart zueinander ausgerichtet sind, daß mindestens einer der IR-Empfangselemente (15) die IR-Primärstrahlen (16) von mindestens einem der IR-Sendeelemente (14) unmittelbar empfangen kann.

23. System nach Anspruch 22, dadurch gekennzeichnet, daß das System Synchronisationsmittel zum Synchronisieren der IR-Sendeeinheit (12) mit der IR-Empfangseinheit (13) aufweist.

24. System nach Anspruch 23, dadurch gekennzeichnet, daß die Synchronisationsmittel eines der IR-Sendeelemente (14) der IR-Sendeeinheit (12) derart ansteuern, daß das IR-Sendeelement (14) in Richtung eines der IR-Empfangselemente (15) einen Synchronisations-IR-Primärstrahl (23) aussendet.

25. Verfahren zum Überwachen eines Bereichs an der Seite eines Fahrzeugs (3) in einem dynamischen Verkehrsumfeld, **gekennzeichnet durch** die nachfolgenden Schritte

- Aussenden von Infrarot (IR)-Primärstrahlen (16) in den Bereich an der Seite des Fahrzeugs (3) durch eine seitlich an dem Fahrzeug (3) angeordnete IR-Sendeeinheit (12),
- Empfangen von an einem Objekt (18; 20), das sich in an der Seite des Fahrzeugs (3) befindet, reflektierten IR-Sekundärstrahlen (21) durch eine seitlich an dem Fahrzeug (3) angeordnete IR-Empfangseinheit (13),
- Bestimmen des Austrittswinkels ($\alpha_i$) der IR-Primärstrahlen (16) aus der IR-Sendeeinheit (12),
- Bestimmen des Einfallswinkels ($\beta_i$) der IR-Sekundärstrahlen (21) in die IR-Empfangseinheit (13), und
- Bestimmen, ob sich das Objekt (18; 20) innerhalb des überwachten Bereichs befindet.

Fig.1